# EUROPÄISCHE PATENTSCHRIFT

(11) **EP 3 158 296 B1**
(45) Veröffentlichungstag und Bekanntmachung des Hinweises auf die Patenterteilung: **20.06.2018**
(21) Anmeldenummer: 15730204.3
(22) Anmeldetag: 23.06.2015
(51) Int. Cl.: G01D 5/353

(54) **FASEROPTISCHER SENSOR SOWIE VERFAHREN ZU DESSEN HERSTELLUNG UND VERWENDUNG**
FIBRE-OPTIC SENSOR AND METHOD FOR THE PRODUCTION AND USE THEREOF
CAPTEUR À FIBRE OPTIQUE AINSI QUE PROCÉDÉ POUR SA FABRICATION ET SON UTILISATION

(30) Priorität: 23.06.2014 DE 102014211918
(43) Veröffentlichungstag der Anmeldung: 26.04.2017
(73) Patentinhaber: Fraunhofer Gesellschaft zur Förderung der angewandten Forschung E.V., 80686 München (DE)
(72) Erfinder: SCHADE, Wolfgang, 38644 Goslar (DE); WALTERMANN, Christian, 38640 Goslar (DE)
(74) Vertreter: Friese Goeden Patentanwälte PartGmbB
(86) Internationale Anmeldenummer: PCT/EP2015/064062
(87) Internationale Veröffentlichungsnummer: WO 2015/197592

(56) Entgegenhaltungen:
- WO-A1-2014/086708
- WO-A2-2005/111677
- US-A1- 2010 329 602
- US-B1- 7 499 605

## Beschreibung

Die Erfindung betrifft einen faseroptischen Sensor mit einem Lichtwellenleiter, welcher zumindest einen ersten Kern und einen den ersten Kern umgebenden Mantel aufweist, wobei der erste Kern sich im Wesentlichen über die gesamte Länge des Lichtwellenleiters erstreckt und in den ersten Kern zumindest ein Bragg-Gitter eingebracht ist. Weiterhin betrifft die Erfindung ein Verfahren zur Herstellung eines faseroptischen Sensors bei welchem ein Lichtwellenleiter mit zumindest einem ersten Kern und einem den ersten Kern umgebenden Mantel bereitgestellt wird, wobei der erste Kern sich im Wesentlichen über die gesamte Länge des Lichtwellenleiters erstreckt und zumindest ein Bragg-Gitter in den ersten Kern durch Bestrahlung mit Laserstrahlung eingebracht wird. Schließlich betrifft die Erfindung ein Verfahren zur Bestimmung einer Torsion, bei welchem ein faseroptischer Sensor verwendet wird. Vorrichtungen und Verfahren der Eingangs genannten Art können dazu verwendet werden, Temperaturen, einwirkende Kräfte oder die Form eines mechanischen Bauteils zu bestimmen.

Aus der US 2007/0297712 A1 ist ein faseroptischer Sensor bekannt, mit welchem die Krümmung eines Körpers bzw. eines mechanischen Bauteils bestimmt werden kann. Hierzu weist der faseroptische Sensor mehrere Kerne auf, welche von einem gemeinsamen Mantel umgeben sind. In den Kernen sind Bragg-Gitter angeordnet, so dass bei Krümmung der Faser unterschiedliche mechanische Druck- und Zugspannungen bestimmt werden können. Hierdurch kann die Krümmung der Faser und damit die Lage des Faserendes im Raum bestimmt werden.

Dieser bekannte faseroptische Sensor weist jedoch den Nachteil auf, dass die Messwerte durch Torsion des Sensors um dessen Längsachse verfälscht werden können. Der bekannte Sensor ist nicht dazu geeignet, Torsion und Krümmung zu unterscheiden, da beide Einwirkungen gleichermaßen zur Veränderung der Gitterkonstanten der Bragg-Gitter führt. WO2005/111677 zeigt einen weiteren faseroptischen Sensor, mit dem Spannungen in einem Körper mit Hilfe eines Bragg-Gitters gemessen werden können. Ausgehend vom Stand der Technik liegt der Erfindung somit die Aufgabe zugrunde, einen faseroptischen Sensor zur Bestimmung von mechanischen Spannungen, Temperaturen und/oder Verformungen mit erhöhter Genauigkeit bereitzustellen.

Die Aufgabe wird erfindungsgemäß durch einen faseroptischen Sensor gemäß Anspruch 1, ein Verfahren zur Herstellung eines faseroptischen Sensors gemäß Anspruch 8 und ein Verfahren zur Bestimmung einer Torsion gemäß Anspruch 10 gelöst.

Erfindungsgemäß wird vorgeschlagen, zur Messung von mechanischen Spannungen, Temperaturen und/oder Verformungen einen faseroptischen Sensor einzusetzen. Der faseroptische Sensor enthält einen Lichtwellenleiter, welcher zumindest einen ersten Kern und einen den ersten Kern umgebenden Mantel aufweist. Kern und Mantel können aus Glas oder Kunststoff bestehen. Zumindest der Kern ist für einen vorgebbaren Wellenlängenbereich des elektromagnetischen Spektrums transparent, so dass sich Licht dieser Wellenlänge bzw. dieses Wellenlängenbereichs im Kern ausbreiten kann. Kern und Mantel weisen jeweils unterschiedliche Brechungsindizes auf, so dass an der Grenzfläche zwischen Kern und Mantel Totalreflexion des im Kern propagierenden Lichts auftritt. In einigen Ausführungsformen der Erfindung kann der Kern kontinuierlich in den Mantel übergehen, so dass sich keine geometrisch definierte Grenzfläche ausbildet. Als Kern kann in diesem Fall der Raumbereich verstanden werden, in welchem das Licht propagiert.

Der zumindest eine erste Kern erstreckt sich im Wesentlichen über die gesamte Länge des Lichtwellenleiters, so dass von einem Ende des Lichtwellenleiters oder von beiden Enden Licht in den Lichtwellenleiter ein- und/oder ausgekoppelt werden kann. Dieser Lichtwellenleiter kann in einigen Ausführungsformen der Erfindung konzentrisch zum Mantel und damit auf der Symmetrieachse eines zylindrischen Lichtwellenleiters angeordnet sein. In einigen Ausführungsformen der Erfindung kann zur Herstellung des Sensors eine Standardfaser aus der Telekommunikationstechnik verwendet werden. Bei Betrieb des Sensors wird zumindest zeitweilig Licht aus einer Lichtquelle eingekoppelt und das durch die Bragg-Gitter transmittierte oder reflektierte Licht wird aus dem Wellenleiter ausgekoppelt und spektral analysiert. Als Lichtquelle eignet sich beispielsweise eine Superlumineszenzdiode.

In dem ersten Kern ist zumindest ein Bragg-Gitter eingebracht. Das Bragg-Gitter kann beispielsweise durch Materialmodifikation des Materials des Kerns mittels Laserstrahlung erzeugt werden. In einigen Ausführungsformen der Erfindung kann die Laserstrahlung gepulst sein, beispielsweise mit einer Pulslänge von weniger als 10 ns, weniger als einer 1 ns oder weniger als 100 fs. In anderen Ausführungsformen der Erfindung kann das Bragg-Gitter durch Dotierung des Materials des Kerns erzeugt werden. In jedem Fall enthält das Bragg-Gitter eine Mehrzahl von räumlich umgrenzten Bereichen, deren Brechungsindex sich vom Brechungsindex des umgebenden Materials des Kerns unterscheidet. Somit wird an den jeweiligen Grenzflächen ein Teil des im Kern propagierenden Lichts reflektiert und ein Teil transmittiert. Mehrere solcher modifizierten Bereiche in vorgebbarem Abstand bilden ein Bragg-Gitter, welches in Abhängigkeit seiner Gitterkonstanten einen Wellenlängenbereich des einfallenden Lichtes reflektiert und Strahlung anderer Wellenlängenbereiche transmittiert. Die Gitterkonstante ist dabei durch den Abstand der modifizierten Bereiche definiert. Bei Änderung der Temperatur oder beim Einwirken mechanischer Spannungen wird das Bragg-Gitter gedehnt oder gestaucht, so dass sich die Gitterkonstante ändert und durch spektroskopische Analyse des transmittierten oder reflektierten Lichtes bestimmbar ist.

Sofern der faseroptische Sensor einer Verformung in zumindest einer Raumrichtung und einer Torsion um seine Längsachse ausgesetzt ist, kann die sich daraus ergebende mechanische Spannung bei bekannten faseroptischen Sensoren nicht getrennt erfasst werden. Unerkannte Torsionsbelastung des bekannten faseroptischen Sensors führt daher zur Verfälschung des Messsignals.

Erfindungsgemäß wird nun vorgeschlagen, dass das Bragg-Gitter bzw. die einzelnen, das Bragg-Gitter bildenden Raumbereiche einen länglichen Querschnitt aufweisen, wobei die kurze Halbachse kleiner ist als der Durchmesser des ersten Kernes. Unter einem länglichen Querschnitt soll für die Zwecke der vorliegenden Erfindung jede Form verstanden werden, welche um eine durch die Längserstreckung des Lichtwellenleiters definierte Achse nicht rotationssymmetrisch ist. Im einfachsten Fall können die einzelnen, das Bragg-Gitter bildenden Raumbereiche Rotationsellipsoide sein. Dieses Merkmal hat die Wirkung, dass die Intensität des vom Bragg-Gitter reflektierten oder transmittierten Lichtes von dessen Polarisationsrichtung abhängig ist. Durch Einstrahlung polarisierten Lichtes kann somit die Intensität des reflektierten Lichtes als Maß der Torsion herangezogen werden, wohingegen aus der Wellenlänge des reflektieren Lichtes ein Messsignal für die mechanische Spannung und/oder Temperatur abgeleitet werden kann.

Sofern eine Mehrzahl von Bragg-Gittern in unterschiedlichem Abstand zur Symmetrieachse des Lichtwellenleiters vorhanden ist, können aus den unterschiedlichen mechanischen Spannungen auch die Krümmung des faseroptischen Sensors und damit die Form eines mit dem Sensor verbundenen Bauteils bestimmt werden. Da die in an sich bekannter Weise gemessenen mechanischen Spannungen nun um den Anteil korrigiert werden können, welcher aus einer Torsion des faseroptischen Sensors resultiert, können einwirkende Kräfte und/oder die Form mit höherer Genauigkeit bestimmt werden. Bragg-Gitter, welche einen Abstand zur Symmetrieachse des Lichtwellenleiters aufweisen, können einen an sich bekannten, im Wesentlichen runden Querschnitt aufweisen.

In einigen Ausführungsformen der Erfindung befindet sich zumindest ein Bragg-Gitter mit länglichem Querschnitt in einem Kern, welcher konzentrisch zum Mantel und damit in der neutralen Faser verläuft. Der geometrische Schwerpunkt des Querschnittes des Bragg-Gitters kann in einigen Ausführungsformen der Erfindung mit dem geometrische Schwerpunkt des Querschnittes des Wellenleiters bzw. der optischen Faser zusammenfallen.

In einigen Ausführungsformen der Erfindung variiert auch die Gitterkonstante der Bragg-Gitter periodisch mit der Torsionsspannung, so dass die Wellenlänge reflektierten Lichtes zur Plausibilisierung der Messwerte herangezogen werden kann.

In einigen Ausführungsformen der Erfindung sind beide Halbachsen des länglichen Querschnittes des Bragg-Gitters kleiner als der Durchmesser des Kerns. Hierdurch kann das Bragg-Gitter vollständig im Kern des faseroptischen Sensors angeordnet werden, so dass sich eine erhöhte Genauigkeit bei der Bestimmung der Torsion ergibt.

In einigen Ausführungsformen der Erfindung kann der faseroptische Sensor eine Mehrzahl von Bragg-Gittern mit länglichen Querschnitt aufweisen, welche beabstandet zueinander zumindest im ersten Kern angeordnet sind, wobei die Orientierung der länglichen Querschnitte gleich ist. Dies erlaubt die Bestimmung der Torsion an mehreren Stellen entlang der Länge des Lichtwellenleiters, so dass die gesamte Torsion des faseroptischen Sensors mit größerer Genauigkeit bestimmt werden kann.

In einigen Ausführungsformen der Erfindung ist zumindest ein erster Kern in einer neutralen Faser des Lichtwellenleiters angeordnet. Dadurch bleibt das Bragg-Gitter frei von mechanischen Spannungen, so dass die Torsion des Lichtwellenleiters mit größerer Genauigkeit bestimmt werden kann.

In einigen Ausführungsformen der Erfindung weist der faseroptische Sensor eine Mehrzahl von Bragg-Gittern auf, deren Gitterkonstanten verschieden voneinander sind. Hierdurch kann der Messort für mechanische Spannung und/oder Torsion aufgrund der Wellenlänge des reflektierten bzw. transmittierten Lichtes bestimmt werden. Dies erlaubt eine einfache Bestimmung dieser Messgrößen an mehreren Stellen des faseroptischen Sensors in einem Multiplexverfahren.

In einigen Ausführungsformen der Erfindung kann der faseroptische Sensor weiterhin zumindest einen zweiten Kern enthalten, welcher zumindest teilweise vom Mantel umgeben ist, wobei die Längserstreckung des zweiten Kerns geringer ist als die gesamte Länge des Lichtwellenleiters und in den zweiten Kern zumindest ein Bragg-Gitter eingebracht ist. Dies erlaubt die Realisierung mehrerer Messorte entlang der Länge des faseroptischen Sensors. Da jedoch nur eine geringere Anzahl erster Kerne bis an die Enden des faseroptischen Sensors geführt sind, kann eine größere Anzahl zweiter Kerne in einfacher Weise mit einer Lichtquelle und/oder einer spektroskopischen Signalanalyse gekoppelt werden. Der Aufwand für die Auslese mehrerer Messstellen im Wellenlängen- und/oder Zeitmultiplex sinkt hierdurch.

In einigen Ausführungsformen der Erfindung sind auch in den zweiten Kernen zumindest teilweise Bragg-Gitter eingebracht, welche einen länglichen Querschnitt aufweisen, wobei die kurze Halbachse kleiner ist als der Durchmesser des zweiten Kernes. Dies ermöglicht den zweiten Kernen die synchrone Erfassung von Torsion und Spannung.

In einigen Ausführungsformen der Erfindung weisen die Bragg-Gitter des zweiten Kernes zumindest teilweise einen runden Querschnitt auf. In diesem Fall kann das erfindungsgemäß vorgeschlagene elliptische Bragg-Gitter im ersten Kern angeordnet sein, so dass die Bragg-Gitter des ersten Kernes zur Messung von Temperatur und/oder Torsion verwendet werden und die Bragg-Gitter des zweiten Kernes zur Messung mechanischer Spannung und damit zur Bestimmung einwirkender Kräfte oder Verformungen.

In einigen Ausführungsformen der Erfindung ist der Lichtwellenleiter des faseroptischen Sensors nicht polarisationserhaltend. Dies bedeutet, dass polarisiertes Licht, welches im ersten Kern propagiert, seine Polarisationsrichtung nicht ändert, wenn eine relative Verdrehung zwischen der Polarisationsebene und dem Kern des Lichtwellenleiters vorliegt. Anders ausgedrückt ist der Kern mit Ausnahme der Bragg-Gitter isotrop, so dass die Orientierung des Kernes entlang dessen Längserstreckung keinen Einfluss auf die Polarisationsebene des propagierenden Lichtes hat.

In einigen Ausführungsformen des erfindungsgemäßen Messverfahrens kann in den faseroptischen Sensor polarisiertes Licht eingekoppelt werden, dessen Polarisationsrichtung sich zyklisch ändert. In einigen Ausführungsformen der Erfindung kann sich die Polarisationsrichtung gleichförmig drehen. Das von zumindest einem Bragg-Gitter reflektierte Licht zeigt dann eine zeitliche Änderung der Intensität, welche phasenstarr an die zyklische Änderung der Polarisation der eingekoppelten Lichtwelle gekoppelt ist. Falls sich die Polarisationsrichtung gleichförmig dreht, wird die Intensität des reflektierten Lichtes sinusförmig an- und abschwellen. Sofern die Faser einer Torsion ausgesetzt wird, kommt es zu einer Phasenverschiebung zwischen dem zeitlichen Verlauf der Polarisationsrichtung der eingestrahlten Welle und dem zeitlichen Amplitudenverlauf der reflektierten Intensität. Aus dieser Phasenverschiebung kann die Größe der Torsion bestimmt werden. Alternativ kann eine Phasenverschiebung zwischen dem zeitlichen Amplitudenverlauf der reflektierten Intensität von zwei unterschiedlichen länglichen bzw. elliptischen faser-Bragg-Gittern bestimmt werden. Daraus lässt sich die Torsion des zwischen den beiden Bragg-Gittern gelegenen Längsabschnittes ermitteln.

In einigen Ausführungsformen der Erfindung kann das erfindungsgemäß vorgeschlagene Bragg-Gitter mit elliptischem Querschnitt durch Lasermaterialbearbeitung hergestellt werden. Hierbei kann die Laserstrahlung durch zumindest eine Zylinderlinse auf den Kern fokussiert werden. Da die Materialmodifikation durch die Laserstrahlung auf den Fokuspunkt des Laserstrahls begrenzt ist, ergibt sich bei einem elliptischen Fokus auch ein modifizierter Raumbereich mit der Form einen Rotationsellipsoides.

In anderen Ausführungsformen der Erfindung kann zumindest ein Bragg-Gitter des faseroptischen Sensors durch Laserstrahlung erzeugt werden, welche durch zumindest eine Intensitätsmaske in der Intensität moduliert wird, ehe sie auf dem Kern auftrifft. Dies erlaubt, dass der entstehende Fokus nicht punkt- bzw. kugelförmig ist, sondern in einer Raumrichtung eine größere Längserstreckung aufweist wie in der anderen Raumrichtung. Hierdurch können die erfindungsgemäß vorgeschlagenen, länglichen bzw. elliptischen Raumbereiche erzeugt werden, so dass sich die erfindungsgemäß verwendeten Bragg-Gitter ergeben.

Der erfindungsgemäße faseroptische Sensor kann beispielsweise Teil eines Katheters für medizinische Anwendungen, ein Teil eines Bohrwerkzeuges oder Teil eines Endoskops sein. Der faseroptische Sensor kann durch Kleben oder Schweißen mit den genannten Geräten verbunden sein. Soweit ein Katheter aus einem Kunststoffmaterial besteht oder ein solches enthält, kann der faseroptische Sensor entweder beim Urformen des Katheters eingebettet werden oder durch Materialbearbeitung eines Teils des Materials des Katheters unmittelbar Bestandteil dieses Katheters sein. Ein Katheter kann in einigen Ausführungsformen der Erfindung ein Hirnkatheter oder ein Herzkatheter sein.

Der erfindungsgemäße faseroptische Sensor kann zur Steuerung und/oder Positionierung eines Werkzeuges einer Werkzeugmaschine eingesetzt werden, beispielsweise einer Dreh- oder Fräsmaschine oder eines Bestückungsautomaten. Damit ist es möglich die x,y,z-Koordinaten und Winkelkoordinaten des Werkzeuges im Raum genau zu bestimmen und so die Position des Werkzeuges mit einer zugehörigen CAD-Zeichnung abzugleichen bzw. die Position des Werkzeuges auf eine aus einem CAD-Modell entnommene Soll-Position zu regeln. Bei langen Bohrwerkzeugen, welche dazu neigen, im Werkstück bzw. im Boden zu verlaufen, kann die Lage der Bohrung und damit die Position der Werkzeugspitze im Material bzw. im Boden präzise bestimmt werden.

Durch die Messung von mechanischen Spannungen und Torsion des faseroptischen Sensors kann die Form des mit dem Sensor verbundenen Bauteils bestimmt werden. Aufgrund der bekannten Länge eines Katheters oder eines Bohrwerkzeuges oder eines Endoskops kann bei Festlegung einer Koordinate die Position im Raum des Werkzeugs bzw. der Werkzeugspitze ermittelt werden, so dass eine genaue Positionierung im Gelände bzw. in einem menschlichen oder tierischen Körper ermöglicht wird.

Nachfolgend soll die Erfindung anhand von Figuren ohne Beschränkung des allgemeinen Erfindungsgedankens näher erläutert werden. Dabei zeigt
Figur 1 einen Ausschnitt aus einer ersten Ausführungsform eines faseroptischen Sensors.
Figur 2 zeigt einen Ausschnitt aus einer zweiten Ausführungsform eines faseroptischen Sensors.
Figur 3 zeigt einen Ausschnitt aus einer dritten Ausführungsform eines faseroptischen Sensors.
Figur 4 zeigt Messergebnisse, welche mit einem erfindungsgemäßen faseroptischen Sensor erhältlich sind.
Figur 5 zeigt schematisch eine Torsion eines Lichtwellenleiters.
Figur 6 erläutert die Signalschwächung polarisierten Lichtes an den erfindungsgemäßen Bragg-Gittern.
Figur 7 zeigt modellhaft einen faseroptischen Sensor, an welchem das erfindungsgemäße Messprinzip näher erläutert wird.
Figur 8 zeigt Messwerte, welche mit dem Sensor gemäß Fig. 7 erhältlich sind.

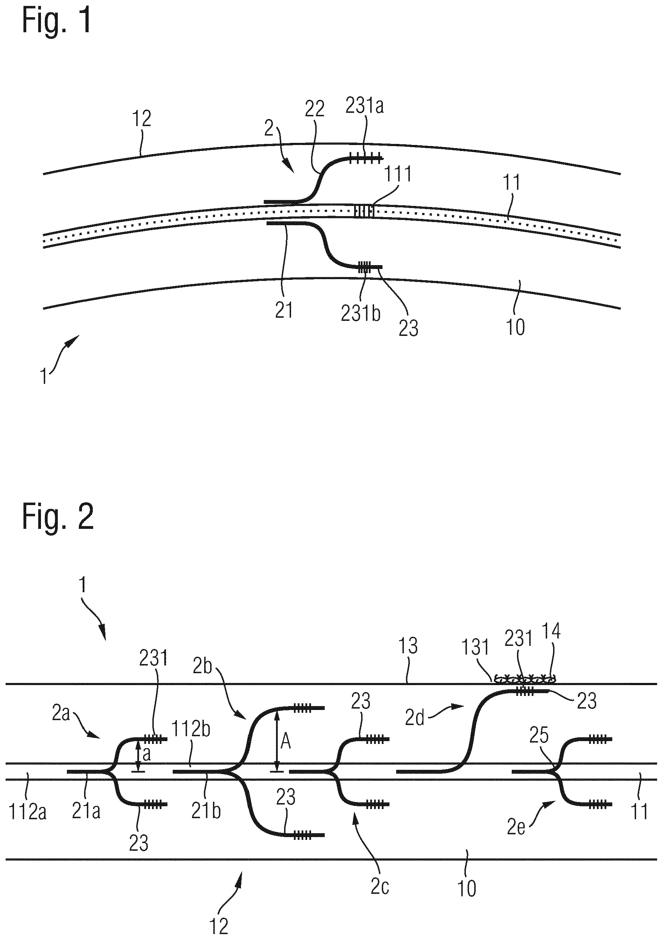

Figur 1 zeigt eine erste Ausführungsform der Erfindung. In Figur 1 ist ein Ausschnitt aus einem faseroptischen Sensor 1 dargestellt. Der faseroptische Sensor 1 enthält einen Lichtwellenleiter 12. Der Lichtwellenleiter 12 umfasst einen Mantel 10 mit einem Kern 11. Im dargestellten Ausführungsbeispiel ist der Querschnitt rund, so dass der Lichtwellenleiter 12 eine in etwa zylindrische Außenkontur aufweist.

Der erste Kern 11 ist konzentrisch zum Mantel 10 angeordnet, d.h. der erste Kern 11 befindet sich auf der Symmetrieachse des Lichtwellenleiters 12. Der erste Kern 11 erstreckt sich im Wesentlichen über die gesamte Länge des Lichtwellenleiters 12. Dies schließt nicht aus, dass der erste Kern 11 nur an einem Ende des Lichtwellenleiters 12 bis zu dessen Ende geführt ist, um dort mit einer optischen und/oder elektronischen Schaltung zur Signalauslese und Signalerzeugung verbunden zu werden. Am gegenüberliegenden Ende kann der Lichtwellenleiter auch im Material des Mantels 10 enden, so dass ein weiterer Längsabschnitt des Lichtwellenleiters 12 vorhanden ist, in welchem der erste Kern 11 fehlt.

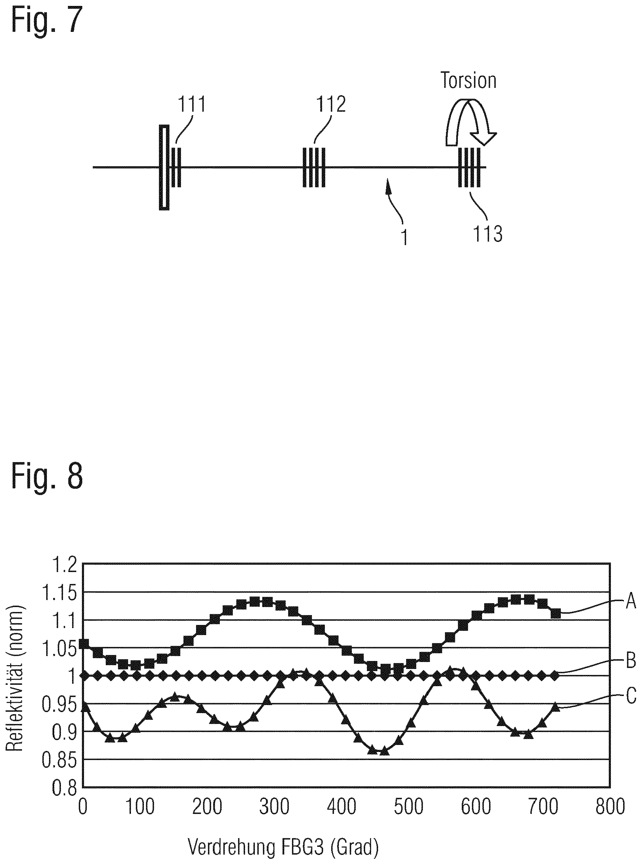

Weiterhin weist der faseroptische Sensor 1 zwei zweite Kerne 2 auf. Im dargestellten Ausführungsbeispiel ist ein zweiter Kern in der oberen Hälfte des Lichtwellenleiters 12 angeordnet und ein zweiter Kern 2 ist in der unteren Hälfte des Lichtwellenleiters 12 angeordnet. Die tatsächliche Lage innerhalb des Lichtwellenleiters wird nachfolgend anhand der Figur 7 näher erläutert. Auch wenn zwei zweite Kerne 2 in Figur 1 dargestellt sind, müssen diese nicht notwendigerweise innerhalb derselben Schnittebene liegen. Der Brechungsindex der zweiten Kerne unterscheidet sich vom Brechungsindex des umgebenden Mantels, so dass Licht an der Grenzfläche reflektiert werden kann.

Jeder zweite Kern 2 weist einen ersten Längsabschnitt 21, einen zweiten Längsabschnitt 22 und einen dritten Längsabschnitt 23 auf. Der erste Längsabschnitt 21 ist dazu eingerichtet, durch evaneszente Kopplung Licht zu empfangen, welches im ersten Kern 11 geführt wird. Gleichzeitig kann im zweiten Kern 2 geführtes Licht durch evaneszente Kopplung in den ersten Kern 11 überführt werden.

Der dritte Längsabschnitt 23 weist einen größeren Abstand zum ersten Kern 11 auf. Hierdurch wird eine optische Kopplung zwischen den Kernen im dritten Längsabschnitt 23 vermieden. Im dritten Kern 23 befindet sich jeweils ein zugeordnetes Bragg-Gitter 231a bzw. 231b.

Der zweite Längsabschnitt 22 verbindet den ersten Längsabschnitt 21 mit dem dritten Längsabschnitt 23. Hierdurch wird Licht, welches im ersten Kern 11 geführt wird, über den ersten Längsabschnitt 21 und den zweiten Längsabschnitt 22 und den dritten Längsabschnitt 23 geleitet. Dort wird ein Teil der elektromagnetischen Strahlung am jeweiligen Bragg-Gitter 231 reflektiert, so dass dieser Anteil des Lichtes erneut durch den zweiten Längsabschnitt 22 in den ersten Längsabschnitt 21 geleitet wird und dort durch evaneszente Kopplung in den ersten Kern 11 gelangt. Das reflektierte Licht propagiert weiter zum Ende des Wellenleiters 12, wo es mittels eines Spektrometers nachgewiesen werden kann.

Die vom Bragg-Gitter 231a bzw. 231b reflektierte Wellenlänge hängt von der Gitterkonstanten des Bragg-Gitters ab, welche wiederum durch mechanische Spannung beeinflusst werden kann. Wie in Figur 1 dargestellt, wird bei einer Krümmung des Lichtwellenleiters 12 das untere Bragg-Gitter 231b gestaucht und das obere Bragg-Gitter 231a gedehnt. Somit kann durch die Änderung des reflektierten Spektrums die Krümmung des Lichtwellenleiters 12 bestimmt werden, so dass der Faseroptische Sensor 1 als ein- oder mehrdimensionaler Lagesensor arbeitet.

Der erste Kern 11 enthält ein weiteres optionales Bragg-Gitter 111, welches in etwa an der gleichen Stelle der Längserstreckung des Lichtwellenleiters 12 angeordnet ist. Da der erste Kern 11 im Mittelpunkt des Lichtwellenleiters 12 angeordnet ist, erfährt dieser als neutrale Faser bei der Biegung des Lichtwellenleiters 12 keine Längenänderung. Sofern dennoch eine Änderung des reflektierten Spektrums nachgewiesen wird, so ist diese auf eine Temperaturänderung und die dadurch hervorgerufenen Änderungen des Brechungsindex und der Länge des Lichtwellenleiters 12 zurückzuführen. Somit können die am optionalen Bragg-Gitter 111 erhaltenen Messwerte zur Temperaturkompensation der Messwerte der Bragg-Gitter 231a und 231b verwendet werden.

Figur 2 zeigt den Querschnitt durch eine zweite Ausführungsform der Erfindung. Gleiche Bestandteile der Erfindung sind mit gleichen Bezugszeichen versehen, so dass sich die Beschreibung auf die wesentlichen Unterschiede beschränkt.

Auch der faseroptische Sensor 1 gemäß der zweiten Ausführungsform umfasst einen Lichtwellenleiter 12. Im Lichtwellenleiter 12 ist ein erster Kern 11 ausgebildet, welcher sich auf der Symmetrieachse bzw. im Zentrum des Lichtwellenleiters 12 befindet. Im umgebenden Mantel 10 sind zweite Kerne 2a, 2b, 2c, 2d und 2e ausgebildet. Auch diese Kerne müssen nicht notwendiger Weise in der Schnittebene liegen, wie bereits vorstehend erläutert.

Zur Einkopplung des im ersten Kern 11 geführten Lichtes in die zweiten Kerne 2a, 2b, 2c, 2d und 2e weist der erste Längsabschnitt 21 der zweiten Kerne 2 jeweils eine geometrische Überlappung mit einem Teilabschnitt 112 des ersten Kernes 11 auf. Beispielsweise überlappt der erste Längsabschnitt 21a der zweiten Kerne 2a mit einem Längsabschnitt 112a des ersten Kernes 11. Weiterhin überlappt der erste Längsabschnitt 21b des zweiten Kernes 2b mit einem Längsabschnitt 112b des ersten Kernes 11. Somit kann Licht, welches im ersten Kern 11 geführt wird, in einfacher Weise und mit hoher Effizienz in den zweiten Kern 2 eingekoppelt werden.

Weiterhin weisen die zweiten Kerne jeweils eine Abzweigung bzw. Bifurkation 25 auf. Somit kann eine Mehrzahl von zweiten Kernen 2 einen gemeinsamen ersten Längsabschnitt 21 aufweisen. An die Bifurkation 25 setzt dann jeweils ein zugeordneter zweiter Längsabschnitt 22 und ein dritter Längsabschnitt 23 an.

Weiterhin ist in Figur 2 gezeigt, dass die dritten Längsabschnitte 23 der zweiten Kerne 2a, 2c und 2e einen kleineren Abstand a zur Symmetrieachse des Lichtwellenleiters 12 aufweisen. Demgegenüber weisen die dritten Längsabschnitte 23 der zweiten Kerne 2b einen größeren Abstand A zur Symmetrieachse auf. Somit können die zweiten Kerne 2a, 2c und 2e einen großen Krümmungs- bzw. Verformungsbereich nachweisen. Die zweiten Kerne 2b sind dazu geeignet, einen geringeren Bereich der Krümmung mit höherer Auflösung und damit höherer Genauigkeit nachzuweisen.

Schließlich zeigt Figur 2 einen zweiten Kern 2d, welcher zum Nachweis von Molekülen 14 eingerichtet ist. Die Moleküle 14 können Bestandteil der den Lichtwellenleiter umgebenden Atmosphäre sein bzw. in einer wässrigen Lösung gelöst sein, in welche der Lichtwellenleiter 12 eingetaucht wird.

Die Mantelfläche 13 weist zumindest eine Teilfläche 131 auf, welche funktionalisiert wurde, d.h. die Teilfläche 131 ist so ausgestaltet, dass die Moleküle 14 sich bevorzugt auf dieser Teilfläche anlagern und/oder dass die Anlagerung anderer Moleküle auf der Teilfläche 131 reduziert oder vermieden wird.

In einem Abstand von weniger als 10 µm unter der Mantelfläche 13 befindet sich der dritte Längsabschnitt 23 des zweiten Kernes 2g. Licht, welches im dritten Längsabschnitt 23 geführt ist kann zumindest teilweise aus dem Mantel 10 des Lichtwellenleiters 12 austreten und resonant von den Molekülen 14 absorbiert werden. Zur Filterung einer Wellenlänge, welche selektiv von den Molekülen 14 absorbiert wird und daher zum Nachweis der Anwesenheit dieser Moleküle verwendet werden kann, dient ein Bragg-Gitter 231 im dritten Längsabschnitt 231 im dritten Längsabschnitt 23 des zweiten Kernes 2d.

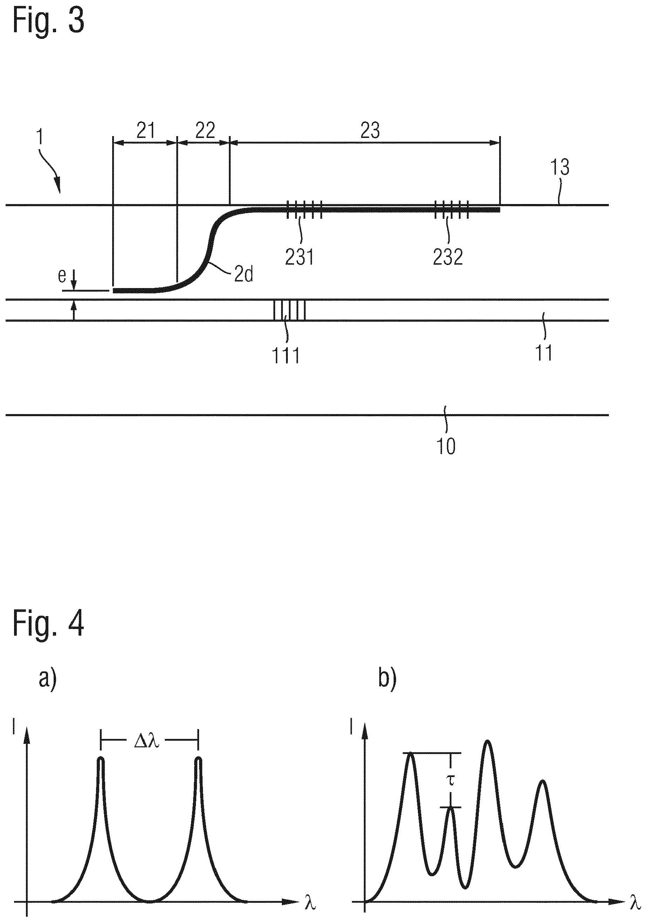

Figur 3 zeigt einen Ausschnitt aus einer dritten Ausführungsform eines faseroptischen Sensors. Dargestellt ist ein zweiter Kern 2d, dessen dritter Längsabschnitt 23 bis nahe der Oberfläche 13 des Mantels 10 des Lichtwellenleiters 12 geführt ist. Beispielsweise kann der dritte Längsabschnitt 23 des zweiten Kernes 2d einen Abstand von weniger als etwa 10 µm oder weniger als etwa 5 µm oder weniger als etwa 3 µm oder weniger als etwa 2 µm oder weniger als etwa 1 µm zur Mantelfläche 13 des Lichtwellenleiters 12 aufweisen.

Eine Teilfläche 131 der Mantelfläche 13 kann funktionalisiert sein, um die Absorption vorgebbarer Moleküle aus der Gasphase oder einer wässrigen Lösung zu erleichtern. Sofern die nachzuweisenden Moleküle an der Teilfläche 131 gebunden oder adsorbiert sind, kann elektromagnetische Strahlung einen elektronischen Übergang des Moleküls anregen, so dass die Strahlung absorbiert wird und die anhaftenden Moleküle spektroskopisch nachgewiesen werden können.

Die zwei Bragg-Gitter 231 und 232 weisen in einigen Ausführungsformen der Erfindung eine unterschiedliche Gitterkonstante auf. Die zwei Bragg-Gitter 231 und 232 reflektieren somit unterschiedliche Anteile des elektromagnetischen Spektrums, welches über den ersten Kern 11 und den ersten Längsabschnitt 21 des zweiten Kernes 2d in den dritten Längsabschnitt 23 geleitet wird. Das Intensitätsverhältnis kann mit der Auswerteschaltung 3 bestimmt werden, so dass aus dem Intensitätsverhältnis unmittelbar auf die Anwesenheit der Moleküle 14 geschlossen werden kann. Eine größere Anzahl an Molekülen bewirkt dabei eine größere Schwächung des Signals, so dass aus dem Intensitätsverhältnis auch auf die Konzentration der Moleküle in der Umgebung des Sensors 1 geschlossen werden kann. In anderen Ausführungsformen der Erfindung kann mit der Auswerteschaltung 3 eine durch absorbierte und/oder adsorbierte Moleküle induzierte Verschiebung der vom Bragg-Gitter reflektierten und/oder transmittierten Wellenlänge nachgewiesen werden, um die Konzentration zu bestimmen.

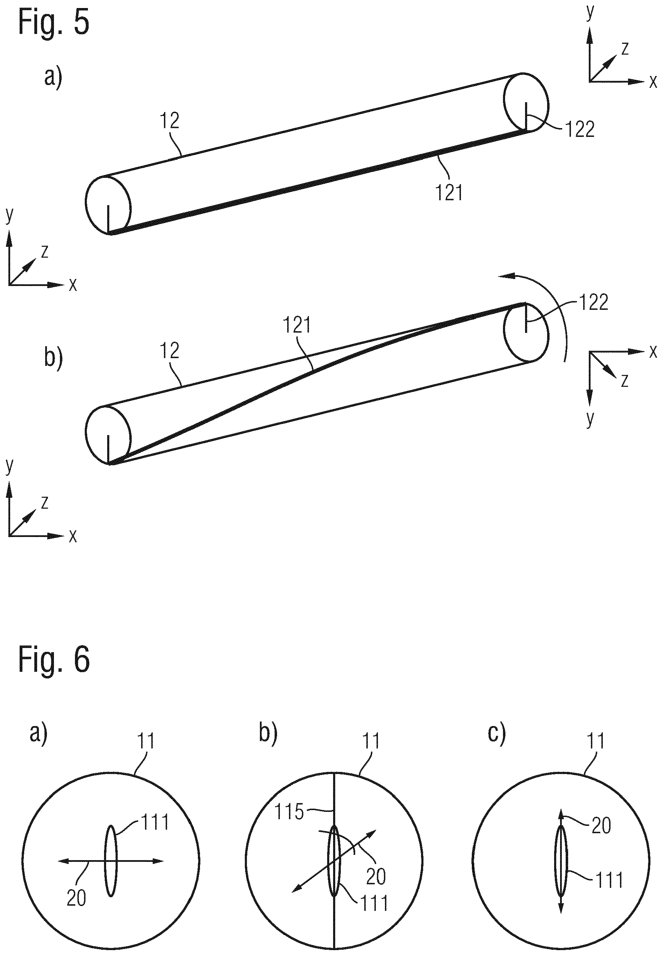

Figur 5 erläutert beispielhaft das Auftreten einer Torsion an einem Lichtwellenleiter 12. Der Lichtwellenleiter weist eine in etwa zylindrische Grundform auf, wie vorstehend bereits erläutert wurde. Aus Gründen der Übersichtlichkeit sind erste und zweite Kerne in Fig. 5 nicht dargestellt. An der Oberfläche des Lichtwellenleiters 12 ist eine gerade Linie 121 dargestellt, welche als lediglich gedankliches Konzept zu verstehen ist. Gleiches gilt für die Linien 122, welche sich vom Mittelpunkt der Stirnseiten bis zu den Endpunkten der Linie 121 erstrecken. Diese Linien sind lediglich zur Illustration der auftretenden Torsionsspannung dargestellt und müssen bei realen Ausführungsformen des faseroptischen Sensors nicht zwingend auf diesem erkennbar sein.

Figur 5a zeigt den faseroptischen Sensor 12 in seiner Ruhelage, d.h. der Lichtwellenleiter 12 ist keiner Torsion ausgesetzt.

Figur 5b erläutert beispielhaft das Auftreten einer Torsionsspannung, in dem eine Stirnfläche festgehalten wird und die gegenüberliegende Stirnseite um etwa 180° gedreht wird. Wie anhand der Linie 121 in Fig. 5b dargestellt ist, kommt es hierbei zu einer Verdrillung bzw. Verwringung des Lichtwellenleiters 12 über dessen Länge. Die Aufgabe der Erfindung besteht darin, die durch diese Torsion in den Lichtwellenleiter 12 eingeprägte mechanische Spannung von derjenigen mechanischen Spannung zu unterscheiden, welche durch Verformung bzw. Auslenkung in einer der kartesischen Raumrichtung X, Y oder Z hervorgerufen wird.

Das der Erfindung zugrundeliegende Messprinzip ist in Fig. 6 näher erläutert. Fig. 6 zeigt drei Querschnitte a), b) und c) mit jeweils unterschiedlicher Torsionsspannung.

Jeder der in Fig. 6 dargestellten Querschnitte zeigt einen ersten Kern 11. Aus Gründen der Übersichtlichkeit ist der den Kern umgebende Mantel 10 des Lichtwellenleiters 12 sowie die zweiten Kerne, welche sich optional im Mantel befinden können, nicht dargestellt.

Im Kern 11 befindet sich zumindest ein Bragg-Gitter 111, welches einen länglichen Querschnitt aufweist. Im dargestellten Ausführungsbeispiel ist der Querschnitt elliptisch. Sowohl die kleine als auch die große Halbachse sind im dargestellten Ausführungsbeispiel kleiner als der Durchmesser des Kernes 11, so dass das Bragg-Gitter 111 vollständig im Inneren des Kernes 11 angeordnet ist.

Weiterhin zeigen die Fig. 6a), 6b) und 6c) jeweils die Polarisationsrichtung 20 einer polarisierten optischen Welle. Die optische Welle kann in an sich bekannter Weise in den ersten Kern 11 eingekoppelt werden, um die im faseroptischen Sensor befindlichen Bragg-Gitter zu vermessen bzw. abzufragen. Aus den reflektierten bzw. transmittierten Anteilen des optischen Spektrums kann die mechanische Spannung sowie die Torsion des faseroptischen Sensors bestimmt werden, so dass aus diesen Größen einwirkende Kräfte und/oder die Form des faseroptischen Sensors bestimmt werden können. Beispiele für diese Messwerte sind in Fig. 4 dargestellt.

Figur 6a) zeigt den Fall, in welchem die Polarisationsrichtung 20 senkrecht auf der großen Halbachse des elliptischen Bragg-Gitters 111 steht. In diesem Fall ist die Reflektivität des Bragg-Gitters 111 minimal. Wenn auf den Lichtwellenleiter eine Torsion in der in Fig. 5 dargestellten Art einwirkt, so ändert sich der Winkel zwischen der Polarisationsrichtung 20 und der großen Halbachse 115 des elliptischen Querschnittes des Bragg-Gitters 111. In Fig. 6b) ist beispielhaft ein Winkel von etwa 45° dargestellt.

Fig. 6c) zeigt den Fall, dass die Polarisationsrichtung 20 parallel zur großen Halbachse 115 des elliptischen Querschnitts des Bragg-Gitters 111 verläuft. In diesem Fall ist die Reflektivität des Bragg-Gitters maximal. In dem in Fig. 6b) dargestellten Fall wird sich ein Reflexionsgrad zwischen dem Minimum und dem Maximum einstellen.

Fig. 4 zeigt Messwerte, welche mit dem erfindungsgemäßen Sensor erhältlich sind. Dargestellt sind jeweils die Intensität auf der Ordinate und die Wellenlänge auf der Abszisse. Fig. 4 a) zeigt den Fall eines an sich bekannten faseroptischen Sensors. Bei Auftreten einer mechanischen Spannung wird die Gitterkonstante des Bragg-Gitters 111 bzw. 231 größer oder geringer, so dass sich eine Verschiebung der vom Bragg-Gitter reflektierten Wellenlänge um den Betrag Δλ ergibt.

In Fig. 4 b) ist exemplarisch eine Messung mit einem erfindungsgemäßen Sensor gezeigt. Dargestellt ist das reflektierte Spektrum von vier Bragg-Gittern mit unterschiedlichen Gitterkonstanten. Jedes Faser-Bragg-Gitter reflektiert einen andern Wellenlängenbereich des elektromagnetischen Spektrums, so dass sich vier in etwa äquidistante SPitzenwerte ergeben.

Bei Einwirken einer mechanischen Spannung oder Temperaturänderung wird sich die Lage dieser Maximalwerte und einen Betrag Δλ verschieben, wie anhand von Fig. 4a) erläutert wurde.

Das Einwirken einer Torsionsspannung führt dazu, dass sich der Winkel zwischen der großen Halbachse des länglichen Querschnittes des Bragg-Gitters und der Polarisationsrichtung ändert. Hierdurch ändert sich die Reflektivität des Bragg-Gitters, so dass das Auftreten einer Torsionsspannung durch die Änderung der Intensität um den Betrag τ nachgewiesen werden kann.

Fig. 7 zeigt nochmals ein einfaches Experiment, um die Funktionsweise des erfindungsgemäßen faseroptischen Sensors zu zeigen. Fig. 7 erläutert dabei den verwendeten Messaufbau und Fig. 8 zeigt Messergebnisse.

Fig. 7 zeigt schematisch einen faseroptischen Sensor 1, welcher drei Bragg-Gitter 111, 112 und 113 aufweist. Die drei Bragg-Gitter sind in etwa äquidistant über die Länge des faseroptischen Sensors 1 verteilt und weisen unterschiedliche Gitterkonstanten auf, so dass anhand der reflektierten Wellenlänge der Messort bzw. der Ort des jeweiligen Bragg-Gitters unterschieden werden kann.

Der Ort des Bragg-Gitters 111 ist mit einer Einspannung fixiert, so dass an dieser Stelle keine Torsion auftritt. Das gegenüberliegende Ende des faseroptischen Sensors 1 wird mit einer Torsionsspannung beaufschlagt, wie anhand des in Fig. 7 dargestellten Pfeils erläutert wird. Somit besteht am Ort des Bragg-Gitters 111 die geringste Torsionsspannung. Am Ort des Bragg-Gitters 113 besteht die maximale Torsionsspannung. Am Ort des Bragg-Gitters 112 weist die Torsionsspannung einen Mittelwert auf, welcher durch die Länge des faseroptischen Sensors 1 und den Betrag der Winkeländerung durch die Torsionsspannung gegeben ist.

Fig. 8 zeigt die normierte Reflektivität der jeweiligen Bragg-Gitter 111, 112 und 113 auf der Ordinate und den Betrag der Verdrehung des zum Bragg-Gitter 113 benachbarten Endes des faseroptischen Sensors 1 auf der Abszisse. Die Winkeländerung bzw. Verdrehung am Ort des Bragg-Gitters 113 variiert von etwa 0° bis etwa 720°. Die Winkeländerung am Ort des Bragg-Gitters 111 ist 0, d.h. dieses Ende des faseroptischen Sensors 1 ist fest eingespannt.

Kurve B in Fig. 8 zeigt die normierte Reflektivität des Bragg-Gitters 111. Kurve C zeigt Messwerte der Reflektivität für das Bragg-Gitter 113 und Kurve A zeigt Messwerte für die Reflektivität des Bragg-Gitters 112.

Die normierte Reflektivität des Bragg-Gitters 111 beträgt konstant 1.0, d.h. die Reflektivität des Bragg-Gitters 111 für polarisiertes Licht vorgebbarer Polarisationsrichtung ändert sich bei zunehmender Verdrillung bzw. Verwringung des Lichtwellenleiters nicht.

Kurve C zeigt, dass eine Verdrehung des faseroptischen Sensors zu einer in etwa sinusförmig oszillierenden Reflektivität des Bragg-Gitters 113 führt. Die Periode beträgt dabei 180°.

Kurve A zeigt, dass das Bragg-Gitter 112 aufgrund der größeren Entfernung nur eine geringe Winkeländerung erfährt, so dass das Messsignal eine Periode von etwa 360° aufweist.

Figur 8 zeigt somit, dass die normierte Intensität des am Bragg-Gitter reflektierten Lichtes ein Maß für die Winkeländerung an dem jeweiligen Messort ist, so dass die Torsion des faseroptischen Sensors bestimmt werden kann.

Selbstverständlich ist die Erfindung nicht auf die in den Figuren dargestellten Ausführungsformen beschränkt. Die vorstehende Beschreibung ist daher nicht als beschränkend sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Soweit die Ansprüche und die vorstehende Beschreibung "erste" Und "zweite" Merkmale definieren, so dient diese Bezeichnung der Unterscheidung zweier gleichartiger Merkmale, ohne eine Rangfolge festzulegen.

## Patentansprüche

1. Faseroptischer Sensor (1) mit einem Lichtwellenleiter (12), welcher zumindest einen ersten Kern (11) und einen den ersten Kern (11) umgebenden Mantel (10) aufweist, wobei der erste Kern (11) sich im Wesentlichen über die gesamte Länge des Lichtwellenleiters (12) erstreckt und in den ersten Kern (1) zumindest ein Bragg-Gitter (111, 112, 113) eingebracht ist,
**dadurch gekennzeichnet, dass**
das zumindest eine Bragg-Gitter (111, 112, 113) einen länglichen Querschnitt aufweist, wobei die kurze Halbachse kleiner ist als der Durchmesser des ersten Kernes (11) und der Schwerpunkt des Querschnittes des zumindest einen Bragg-Gitters (111, 112, 113) auf der Symmetrieachse des Lichtwellenleiters (12) liegt.

2. Faseroptischer Sensor nach Anspruch 1, **dadurch gekennzeichnet, dass** beide Halbachsen kleiner sind als der Durchmesser des Kernes (11).

3. Faseroptischer Sensor nach Anspruch 1 oder 2, **dadurch gekennzeichnet, dass** dieser eine Mehrzahl von Bragg-Gittern (111, 112, 113) mit elliptischem Querschnitt aufweist, welche beabstandet zueinander im ersten Kern (11) angeordnet sind, wobei die Orientierung der länglichen Querschnitte gleich ist und optional die Gitterkonstanten der einzelnen Bragg-Gitter (111, 112, 113) verschieden von einander sind.

4. Faseroptischer Sensor nach einem der Ansprüche 1 bis 3, weiterhin enthaltend zumindest einen zweiten Kern (2), welcher zumindest teilweise vom Mantel (10) umgeben ist, wobei die Längserstreckung des zweiten Kerns (2) geringer ist als die gesamte Länge des Lichtwellenleiters (12) und in den zweiten Kern (2) zumindest ein Bragg-Gitter (231a, 231b, 232) eingebracht ist.

5. Faseroptischer Sensor nach Anspruch 4, **dadurch gekennzeichnet, dass** zumindest ein Bragg-Gitter (231a, 231b, 232) des zweiten Kerns (2) einen länglichen Querschnitt aufweist, wobei die kurze Halbachse kleiner ist als der Durchmesser des zweiten Kerns (2)

6. Faseroptischer Sensor nach einem der Ansprüche 1 bis 5, **dadurch gekennzeichnet, dass** der Lichtwellenleiter (12) nicht polarisationserhaltend ist.

7. Verfahren zur Herstellung eines faseroptischer Sensors (1) mit folgenden Schritten:
Bereitstellen eines Lichtwellenleiters (12), welcher zumindest einen ersten Kern (11) und einen den ersten Kern (11) umgebenden Mantel (10) aufweist, wobei der erste Kern (11) sich im Wesentlichen über die gesamte Länge des Lichtwellenleiters (12) erstreckt,
Einbringen von zumindest einem Bragg-Gitter (111, 112, 113) in den ersten Kern (11) durch Bestrahlung mit Laserstrahlung,
**dadurch gekennzeichnet, dass**
die Laserstrahlung durch zumindest eine Zylinderlinse auf den Kern (11) fokussiert wird und/oder
die Laserstrahlung durch zumindest eine Intensitätsmaske in der Intensität moduliert wird, ehe sie auf den Kern (11) auftrifft, so dass zumindest ein Bragg-Gitter (111, 112, 113) mit einem länglichen Querschnitt entsteht.

8. Verfahren nach Anspruch 7, **dadurch gekennzeichnet, dass** die Laserstrahlung mit Pulslängen von weniger als 100 ns oder weniger als 25 ns oder weniger als 1 ns oder weniger als 100 fs gepulst ist und/oder
dass die Laserstrahlung Einzelpulse mit vorgebbarer Pulsform aufweist.

9. Verfahren zur Bestimmung einer Torsion, bei welchem ein faseroptischer Sensor (1) verwendet wird, welcher zumindest einen Lichtwellenleiter (12) aufweist, welcher zumindest einen ersten Kern (11) und einen den ersten Kern (11) umgebenden Mantel (10) aufweist, wobei der erste Kern (11) sich im Wesentlichen über die gesamte Länge des Lichtwellenleiters (12) erstreckt, und in den ersten Kern (1) zumindest ein Bragg-Gitter (111, 112, 113) eingebracht ist,
**dadurch gekennzeichnet, dass**
das Bragg-Gitter (111, 112, 113) einen länglichen Querschnitt aufweist, wobei die kurze Halbachse kleiner ist als der Durchmesser des ersten Kernes (11) und der Schwerpunkt des Querschnittes des zumindest einen Bragg-Gitters (111, 112, 113) auf der Symmetrieachse des Lichtwellenleiters (12) liegt, und polarisiertes Licht in den Lichtwellenleiter (12) eingekoppelt wird, welches zumindest teilweise an dem zumindest einen Bragg-Gitter (111, 112, 113) reflektiert wird, und die Intensität des transmittierten oder reflektierten Lichtes bestimmt wird.

10. Verfahren nach Anspruch 9, **dadurch gekennzeichnet, dass** der faseroptische Sensor (1) weiterhin zumindest einen zweiten Kern (2) enthält, welcher zumindest teilweise vom Mantel (10) umgeben ist, wobei die Längserstreckung des zweiten Kerns (2) geringer ist als die gesamte Länge des Lichtwellenleiters (12) und in den zweiten Kern (2) zumindest ein Bragg-Gitter (231a, 231b, 232) eingebracht ist, so dass die Form des faseroptischen Sensors (1) in zumindest einer Raumrichtung zusätzlich zu dessen Torsion bestimmt wird.

11. Verfahren nach Anspruch 9 oder 10, **dadurch gekennzeichnet, dass** mit einer Mehrzahl von Bragg-Gittern (111, 112, 113) mit elliptischem Querschnitt die Torsion des faseroptischen Sensors (1) an mehreren Stellen entlang desen Längserstreckung gemessen wird.

12. Verfahren nach einem der Ansprüche 9 bis 11, **dadurch gekennzeichnet, dass** die Form und/oder die Position im Raum eines Katheters oder eines Endoskopes oder eines Werkzeuges gemessen wird.

13. Verfahren nach einem der Ansprüche 9 bis 12, **dadurch gekennzeichnet, dass** in den faseroptischen Sensor Licht eingekoppelt wird, dessen Polarisationsrichtung sich zeitlich ändert, wobei die zeitliche Änderung der Intensität des an zumindest einem Bragg-Gitter reflektierten Lichtes gemessen und eine Phasenverschiebung zwischen eingekoppeltem und reflektierten Licht bestimmt wird.

14. Verfahren nach einem der Ansprüche 9 bis 13, **dadurch gekennzeichnet, dass** in den faseroptischen Sensor Licht eingekoppelt wird, dessen Polarisationsrichtung sich zeitlich ändert, wobei die zeitliche Änderung der Intensität des an zumindest zwei Bragg-Gitter reflektierten Lichtes gemessen und daraus die Torsion des zwischen den beiden Bragg-Gittern gelegenen Längsabschnittes ermittelt wird.

15. Verfahren nach Anspruch 13 oder 14, **dadurch gekennzeichnet, dass** in den faseroptischen Sensor Licht eingekoppelt wird, dessen Polarisationsrichtung sich zyklisch ändert, insbesondere sinusförmig.

## Claims

1. Fiber-optic sensor (1) with an optical waveguide (12), which has at least one first core (11) and a cladding (10) surrounding the first core (11), wherein the first core (11) extends substantially over the entire length of the optical waveguide (12) and at least one Bragg grating (111, 112, 113) is inserted into the first core (1),
**characterized in that**
the at least one Bragg grating (111, 112, 113) has an elongate cross-section, wherein the short semi-axis is smaller than the diameter of the first core (11) and the centroid of the cross-section of the at least one Bragg grating (111, 112, 113) is on the symmetry axis of the optical waveguide (12).

2. Fiber-optic sensor according to claim 1, **characterized in that** the two semi-axes are smaller than the diameter of the core (11).

3. Fiber-optic sensor according to claim 1 or 2, **characterized in that** it has a plurality of Bragg gratings (111, 112, 113) with elliptic cross-section, which are arranged at a distance from one another in the first core (11), wherein the orientation of the elongate cross-sections is equal and optionally the grating constants of the individual Bragg gratings (111, 112, 113) are different from one another.

4. Fiber-optic sensor according to any of claims 1 to 3, further containing at least one second core (2), which is surrounded at least in part by the cladding (10), wherein the longitudinal extension of the second core (2) is less than the entire length of the optical waveguide (12) and at least one Bragg grating (231a, 231b, 232) is inserted into the second core (2).

5. Fiber-optic sensor according to claim 4, **characterized in that** at least one Bragg grating (231a, 231b, 232) of the second core (2) has an elongate cross-section, wherein the short semi-axis is smaller than the diameter of the second core (2).

6. Fiber-optic sensor according to any of claims 1 to 5, **characterized in that** the optical waveguide (12) is not polarization-maintaining.

7. Method for producing a fiber-optic sensor (1), comprising the following steps:
providing an optical waveguide (12), which has at least one first core (11) and a cladding (10) surrounding the first core (11), wherein the first core (11) extends substantially over the entire length of the optical waveguide (12),
inserting at least one Bragg grating (111, 112, 113) into the first core (11) by irradiation with laser radiation,
**characterized in that**
the laser radiation is focused onto the core (11) by at least one cylindrical lens and/or
the laser radiation is modulated by at least one intensity mask as regards its intensity before it strikes the core (11) so as to form at least one Bragg grating (111, 112, 113) with an elongate cross-section.

8. Method according to claim 7, **characterized in that** the laser radiation is pulsed with pulse lengths of less than 100 ns or less than 25 ns or less than 1 ns or less than 100 fs and/or
that the laser radiation has single pulses with predeterminable pulse shape.

9. Method for determining a torsion, in which a fiber-optic sensor (1) is used that has at least one optical waveguide (12) which includes at least one first core (11) and a cladding (10) surrounding the first core (11), wherein the first core (11) extends substantially over the entire length of the optical waveguide (12) and at least one Bragg grating (111, 112, 113) is inserted into the first core (1),
**characterized in that**
the Bragg grating (111, 112, 113) has an elongate cross-section, wherein the short semi-axis is smaller than the diameter of the first core (11) and the centroid of the cross-section of the at least one Bragg grating (111, 112, 113) is on the symmetry axis of the optical waveguide (12), and polarized light is coupled into the optical waveguide (12), which is reflected at least in part by the at least one Bragg grating (111, 112, 113) and the intensity of the transmitted or reflected light is determined.

10. Method according to claim 9, **characterized in that** the fiber-optic sensor (1) also contains at least one second core (2), which is surrounded at least in part by the cladding (10), wherein the longitudinal extension of the second core (2) is smaller than the entire length of the optical waveguide (12) and at least one Bragg grating (231a, 231b, 232) is inserted into the second core (2), such that the form of the fiber-optic sensor (1) is determined in at least one spatial direction in addition to the torsion thereof.

11. Method according to claim 9 or 10, **characterized in that** the torsion of the fiber-optic sensor (1) is measured with a plurality of Bragg gratings (111, 112, 113) with elliptic cross-section at several points along the longitudinal extension thereof.

12. Method according to any of claims 9 to 11, **characterized in that** the form and/or the position in space of a catheter or an endoscope or a tool is measured.

13. Method according to any of claims 9 to 12, **characterized in that** light is coupled into the fiber-optic sensor, the polarization direction of which changes over time, wherein the temporal change in the intensity of the light reflected by at least one Bragg grating is measured and a phase shift between coupled-in and reflected light is determined.

14. Method according to any of claims 9 to 13, **characterized in that** light is coupled into the fiber-optic sensor, the polarization direction of which changes over time, wherein the temporal change in the intensity of the light reflected by at least two Bragg gratings is measured and the torsion of the longitudinal section between the two Bragg gratings is determined therefrom.

15. Method according to claim 13 or 14, **characterized in that** light is coupled into the fiber-optic sensor, the polarization direction of which changes cyclically, in particular in sine-shaped fashion.

## Revendications

1. Capteur à fibre optique (1) pourvu d'un guide d'ondes optique (12) ayant au moins un premier coeur (11) et une enveloppe (10) entourant le premier coeur (11),
dans lequel le premier coeur (11) s'étend sensiblement sur toute la longueur du guide d'ondes optique (12), et au moins un réseau de Bragg (111, 112, 113) est intégré dans le premier coeur (1),
**caractérisé en ce que**
ledit au moins un réseau de Bragg (111, 112, 113) présente une section transversale allongée, le petit demi-axe étant plus petit que le diamètre du premier coeur (11) et le centre de gravité de la section transversale dudit au moins un réseau de Bragg (111, 112, 113) étant situé sur l'axe de symétrie du guide d'ondes optique (12).

2. Capteur à fibre optique selon la revendication 1,
**caractérisé en ce que**
les deux demi-axes sont plus petits que le diamètre du coeur (11).

3. Capteur à fibre optique selon la revendication 1 ou 2,
**caractérisé en ce que**
celui-ci comprend une pluralité de réseaux de Bragg (111, 112, 113) ayant une section transversale elliptique, qui sont disposés à distance les uns des autres dans le premier coeur (11), l'orientation des sections transversales allongées étant la même, et les constantes des réseaux de Bragg individuels (111, 112, 113) étant en option différentes les unes des autres.

4. Capteur à fibre optique selon l'une des revendications 1 à 3,
comprenant en outre au moins un second coeur (2) qui est entouré au moins partiellement par une enveloppe (10), l'extension longitudinale du second coeur (2) étant inférieure à toute la longueur du guide d'onde optique (12), et au moins un réseau de Bragg (231a, 231b, 232) est intégré dans le second coeur (2).

5. Capteur à fibre optique selon la revendication 4,
**caractérisé en ce que**
au moins un réseau de Bragg (231a, 231b, 232) du second coeur (2) présente une section transversale allongée, le petit demi-axe étant plus petit que le diamètre du second coeur (2).

6. Capteur à fibre optique selon l'une des revendications 1 à 5,
**caractérisé en ce que**
le guide d'ondes optique (12) ne conserve pas la polarisation.

7. Procédé de réalisation d'un capteur à fibre optique (1), comprenant les étapes suivantes consistant à :
fournir un guide d'ondes optique (12) ayant au moins un premier coeur (11) et une enveloppe (10) entourant le premier coeur (11), le premier coeur (11) s'étendant sensiblement sur toute la longueur du guide d'ondes optique (12),
introduire au moins un réseau de Bragg (111, 112, 113) dans le premier coeur (1) par irradiation au laser,
**caractérisé en ce que**
le rayonnement laser est focalisé sur le coeur (11) par au moins une lentille cylindrique, et/ou
le rayonnement laser est modulé vis-à-vis de l'intensité par au moins un masque d'intensité, avant de tomber sur le coeur (11), de sorte qu'il en résulte au moins un réseau de Bragg (111, 112, 113) présentant une section transversale allongée.

8. Procédé selon la revendication 7,
**caractérisé en ce que**
le rayonnement laser est pulsé à des longueurs d'impulsion de moins de 100 ns ou de moins de 25 ns ou de moins de 1 ns ou de moins de 100 fs, et/ou
le rayonnement laser présente des impulsions individuelles de forme donnée.

9. Procédé de détermination d'une torsion, dans lequel on utilise un capteur à fibre optique (1) qui comprend au moins un guide d'ondes optique (12) qui présente au moins un premier coeur (11) et une enveloppe (10) entourant le premier coeur (11), le premier coeur (11) s'étendant sensiblement sur toute la longueur du guide d'ondes optique (12), et au moins un réseau de Bragg (111, 112, 113) est intégré dans le premier coeur (1),
**caractérisé en ce que**
le réseau de Bragg (111, 112, 113) présente une section transversale allongée, le petit demi-axe étant plus petit que le diamètre du premier coeur (11) et le centre de gravité de la section transversale dudit au moins un réseau de Bragg (111, 112, 113) étant situé sur l'axe de symétrie du guide d'ondes optique (12), et
une lumière polarisée est injectée dans le guide d'ondes optique (12), qui est au moins partiellement réfléchie sur ledit au moins un réseau de Bragg (111, 112, 113), et
on détermine l'intensité de la lumière transmise ou réfléchie.

10. Procédé selon la revendication 9,
**caractérisé en ce que**
le capteur à fibre optique (1) comprend en outre au moins un second coeur (2) qui est entouré au moins partiellement par l'enveloppe (10), l'extension longitudinale du second coeur (2) étant inférieure à toute la longueur du guide d'ondes optique (12), et au moins un réseau de Bragg (231a, 231b, 232) est intégré dans le second coeur (2), de telle sorte que la forme du capteur à fibre optique (1) est déterminée dans au moins une direction spatiale, en supplément à sa torsion.

11. Procédé selon la revendication 9 ou 10, **caractérisé en ce qu'**au moyen d'une pluralité de réseaux de Bragg (111, 112, 113) ayant une section transversale elliptique, la torsion du capteur à fibre optique (1) est mesurée à plusieurs emplacements le long de son l'extension longitudinale.

12. Procédé selon l'une des revendications 9 à 11,
**caractérisé en ce que**
on mesure la forme et/ou la position dans l'espace d'un cathéter ou d'un endoscope ou d'un outil.

13. Procédé selon l'une des revendications 9 à 12,
**caractérisé en ce que**
une lumière est injectée dans le capteur à fibre optique, dont la direction de polarisation varie dans le temps, on mesure la variation dans le temps de l'intensité de la lumière réfléchie sur ledit au moins un réseau de Bragg et on détermine un déphasage entre la lumière injectée et la lumière réfléchie.

14. Procédé selon l'une des revendications 9 à 13,
**caractérisé en ce que**
une lumière est injectée dans le capteur à fibre optique, dont la direction de polarisation varie dans le temps, on mesure la variation dans le temps de l'intensité de la lumière réfléchie sur ledit au moins deux réseaux de Bragg et on en détermine la torsion de la portion longitudinale située entre les deux réseaux de Bragg.

15. Procédé selon la revendication 13 ou 14,
**caractérisé en ce que**
une lumière est injectée dans le capteur à fibre optique, dont la direction de polarisation varie cycliquement, en particulier en forme sinusoïdale.
